# EUROPÄISCHE PATENTSCHRIFT

(11) **EP 1 396 396 B1**
(45) Veröffentlichungstag und Bekanntmachung des Hinweises auf die Patenterteilung: **19.04.2006**
(21) Anmeldenummer: 03016575.7
(22) Anmeldetag: 25.07.2003
(51) Int. Cl.: B60R 21/26, B60R 21/20, B23K 20/12

(54) **Verfahren zum Herstellen eines Gasgeneratorgehäuseteils, Gasgenerator mit diesem Gehäuseteil sowie Gassackmodul**
Method of building a housing for a gas generator, gas generator mit said housing and airbag module
Module de coussin gonflable avec carter de générateur de gaz et son procédé de fabrication

(30) Priorität: 03.09.2002 DE 10240640
(43) Veröffentlichungstag der Anmeldung: 10.03.2004
(73) Patentinhaber: TRW Airbag Systems GmbH, 84544 Aschau am Inn (DE)
(72) Erfinder: Bierwirth, Sebastian, Dr., 83562 Rechtmehring (DE); Schwuchow, Karsten, 83512 Wasserburg (DE); Hofmann, Achim, Dr., 84570 Polling (DE); Kapfelsperger, Thomas, 84453 Mühldorf (DE)
(74) Vertreter: Kitzhofer, Thomas

(56) Entgegenhaltungen:
- EP-A- 0 715 995
- EP-A- 1 319 558
- US-A- 5 000 479
- FUKUMOTO S ET AL: "FORMATION PROCESS OF REACTION LAYER BETWEEN ALUMINIUM ALLOYS AND STAINLESS STEEL BY FRICTION WELDING" WELDING INTERNATIONAL, WELDING INSTITUTE. ABINGTON, GB, Bd. 16, Nr. 12, 2002, Seiten 941-946, XP001133635 ISSN: 0950-7116

## Beschreibung

Die Erfindung betrifft ein Verfahren zum Herstellen eines Gasgenerator-gehäuseteils aus einem dünnwandigen Rohr und wenigstens einem seitlich angebrachten Stutzen. Insbesondere betrifft die Erfindung ein Verfahren zum Anbringen eines hohlen Zünderaufnahmegehäuses an das ein Außengehäuse des Gasgenerators definierende Rohr.

An eine Verbindung zwischen einem dünnwandigen Rohr als Teil eines Gasgeneratorgehäuses und einem daran angebrachten Stutzen werden hohe Festigkeits- und Dichtigkeitsanforderungen gestellt. Die Verbindung sollte möglichst eine Festigkeit haben, die der Berstfestigkeit des Rohres entspricht. Vorzugsweise werden die beiden Teile durch Schweißen miteinander verbunden, was aber problematisch ist, da durch die Dünnwandigkeit des Rohres das Materialgefüge aufgrund zu hoher Wärmezufuhr unerwünscht verändert werden kann. Wenn ein dicker, am Verbindungsende massiver Stutzen an ein dünnwandiges Rohr außen angeschweißt wird, ist es nämlich vor allem die Umfangswandung, welche zu hohen Belastungen beim Schweißen ausgesetzt ist. Auf der anderen Seite können Gasgeneratorgehäuseteile leider aufgrund der Gewichtsanforderungen keine Umfangswandungen mit hoher Wandstärke haben.

Dokument US 5 000 479, das als nächstliegender Stand der Technik angesehen wird, offenbart ein Verfahren zum Herstellen eines Gasgeneratorgehäuseteils aus einem dünnwandigen Rohr und einem seitlich daran angebrachten Stutzen, gekennzeichnet durch folgende Schritte:
a) Bereitstellen eines Rohres, dessen Wandstärke maximal 10% des Rohraußendurchmessers beträgt;
b) Bereitstellen eines Stutzens, dessen Außendurchmesser zwischen 15% und 40% des Rohraußendurchmessers beträgt; und
c) Ausrichten des Stutzens radial zum Rohr, so daß eine Stirnfläche des Stutzens der Außenfläche des Rohres zugewandt ist.
Ein Filtergehäuse wird durch Reibverchweißen am Boden einer Brennhammer des Gasgenerator befestigt.

Dokument US 5 000 479 offenbart auch einen Gasgenerator und ein Gassackmodul hergestellt nach dem obengenannten Verfahren.

Die Erfindung schafft ein Verfahren zum Herstellen eines Gasgeneratorgehäuseteils, bei dem das. Rohr nur eine Wandstärke von maximal 10%, vorzugsweise etwa 7% des Rohraußendurchmessers (D) beträgt. Das erfindungsgemäße Verfahren sieht folgende Schritte vor:
a) Bereitstellen eines Rohres, dessen Wandstärke maximal 15% des Rohraußendurchmessers (D) und dessen Mindestzugfestigkeit wenigstens etwa 800 N/mm² beträgt;
b) Bereitstellen eines Stutzens, dessen Außendurchmesser zwischen 15% und 40% des Rohraußendurchmessers (D) beträgt;
c) Ausrichten des Stutzens radial zum Rohr, so daß eine Stirnfläche des Stutzens der Außenfläche des Rohres zugewandt ist;
d) Reibverschweißen des Rohres und des Stutzens unter Erzeugung einer Relativdrehung zwischen dem Rohr und dem Stutzen und einem Aufeinanderzubewegen von Rohr und Stutzen, wobei
e) die maximale Schweißzeit weniger als 1 sec, vorzugsweise weniger als 0,3 sec beträgt und
f) die Reibtiefe weniger als 80% der Wandstärke des Rohres beträgt.

Das erfindungsgemäße Verfahren sieht eine feine Abstimmung von verschiedenen Parametern vor, die es erstrnals erlauben, einen relativ dicken Stutzen an ein dünnwandiges Rohr durch Reibschweißen seitlich anzubringen. Dieses Anschweißen erfolgt üblicherweise dadurch, daß der Stutzen gedreht und dann radial gegen die Umfangswand des Rohres gepreßt wird. Die Reibtiefe soll weniger als 80% der Wandstärke betragen, vorzugsweise etwa zwei Drittel der Wandstärke, so daß auf der Rohrinnenseite noch ein Wandabschnitt bestehen bleibt, der der radialen Krafteinwirkung durch den Stutzen einen ausreichenden Widerstand entgegensetzen kann.

Wie sich bei der aufwendigen Entwicklung und bei zahlreichen Untersuchungen herausgestellt hat, läßt sich wider Erwarten doch dann ein dicker Stutzen an ein dünnwandiges Rohr von außen radial mittels Reibverschweißen anbringen, wenn die Reibtiefe nicht so hoch wird und das Rohr eine Mindestzugfestigkeit von wenigstens 800 N/mm² aufweist.

Eine weitere Überraschung stellt die Erkenntnis dar, daß das Rohr vorzugsweise an der Schweißfläche vor dem Schweißvorgang unbearbeitet bleiben sollte. Das bedeutet, das Rohr wird im Bereich der Schweißfläche, also der Kontaktfläche zwischen dem Stutzen und der RohrauLienfläche, nicht spanend bearbeitet und/oder flachgedrückt, wie es bislang stets angedacht war, um eine möglichst exakte und große Kontaktfläche zwischen dem stirnseitig anzuschweißenden Stutzen und der Umfangswand zur Verfügung zu stellen. Es ist lediglich vorteilhaft, das Rohr außenseitig im Bereich der Schweißfläche zu reinigen. Der vorzugsweise stirnseitig plane Stutzen trifft somit auf die gekrümmte Außenfläche des Rohres. Aufgrund der fehlenden Bearbeitung des Rohres im Bereich der Schweißfläche hat die Umfangswand aber in diesem Bereich eine höhere Stabilität als im bearbeiteten Zustand und kann der radialen Kraft, die durch den Stutzen auf sie ausgeübt wird, einen größeren Widerstand entgegensetzen. Obwohl also die Kontaktflächen weniger groß und weniger genau zueinander ausgerichtet sind, was eine höhere Schweißzeit zur Folge haben kann, wird dieser Nachteil durch die höhere Stabilität der Umfangswand überraschend mehr als kompensiert.

Das Rohr hat eine Wandstärke von maximal 2,5 mm, vorzugsweise sogar maximal 2 mm und einen Rohraußendurchmesser von etwa 35 mm.

Das erfindungsgemäße Verfahren wird insbesondere bei einem Stutzen angewandt, der als Zünderaufnahmegehäuse verwendet wird, also hohl ist. Über ein nach dem Schweißen hergestelltes Durchgangsloch im Stutzen und in der Umfangswand sind dann der Zünder und der Treibsatz mit dem Rohrinneren in Verbindung.

Der Stutzen kann ein verjüngtes, rohrseitiges Ende haben.

Das anzuschweißende Ende des Stutzens ist jedoch massiv, d.h. ohne Durchgangsloch. Vorzugsweise ist die Stirnseite, die in Kontakt mit der Umfangswand gebracht wird, plan, so daß sich zu Beginn des Reibschweißprozesses eine Linienberührung ergibt. Ein Vorteil des verjüngten Endes besteht darin, daß nach dem Reibschweißvorgang das verjüngte Ende eine Nut bildet, in der der Schweißwulst liegt. Es kann damit somit unnötig werden, den Schweißwulst nachzubearbeiten, denn er liegt geschützt vorzugsweise vollständig innerhalb der Nut und stellt kein Verletzungsrisiko dar.

Die Erfindung betrifft darüber hinaus einen Gasgenerator, der nach dem erfindungsgemäßen Verfahren hergestellt wird. Der Gasgenerator ist dadurch gekennzeichnet, daß der Stutzen hohl ist und einen Zünder aufinimmt, der über ein Durchgangsloch im Stutzen mit dem Rohrinneren in Verbindung steht, wobei im Rohrinneren vorzugsweise eine ein pyrotechnisches Material enthaltende Brennkammer vorgesehen ist

Schließlich betrifft die Erfindung auch ein Gassackmodul mit einem erfindungsgemäßen oder erfindungsgemäß hergestellten Gasgenerator und einer Generatorhalteplatte. Der Stutzen dient dabei als Einrichtung zur Befestigung des Gasgenerators an der Generatorhalteplatte, so daß die Verbindung zwischen Stutzen und Gasgenerator auch noch zusätzliche Festigkeitsanforderungen erfüllt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Fig. 1 eine Längsschnittansicht durch eine Ausführungsform des erfindungsgemäßen Gassackmoduls mit einem nach dem erfindungsgemäßen Verfahren hergestellten, erfindungsgemäßen Gasgenerator,
Fig. 2 einen Schnitt durch den Gasgenerator längs der Linie II-II in Fig. 1 und
Fig. 3 den Querschnitt gemäß Fig. 2 in einer vereinfachen Symboldarstellung zur Angabe der Maße von Rohr und Stutzen sowie
Fig. 4 Rohr und Stutzen vor Herstellen der Reibschweißverbindung.

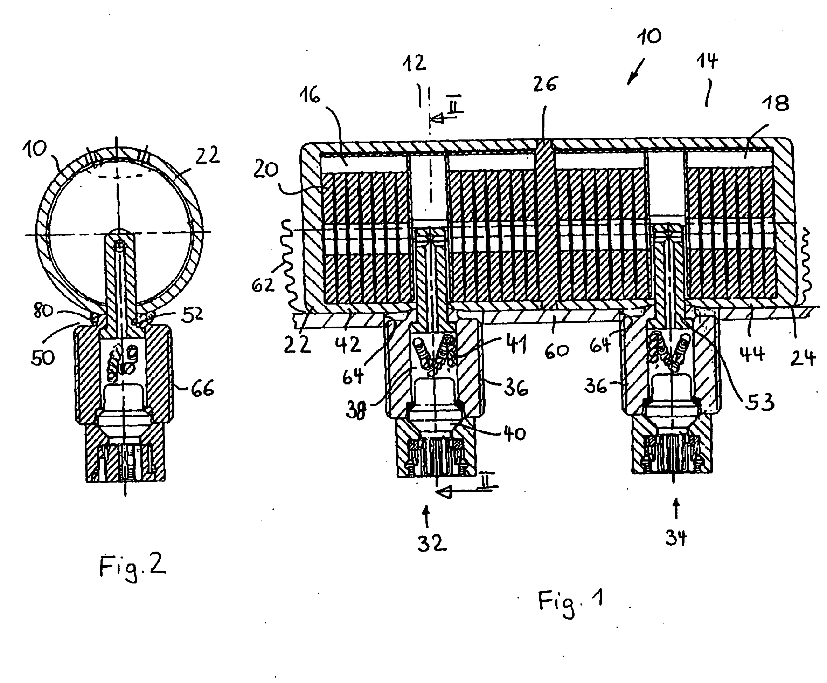

In Fig. 1 ist ein zweistufiger Rohrgasgenerator 10 dargestellt. Die Stufen 12 und 14 sind durch zwei getrennte Brennkammern 16 bzw. 18 definiert, welche mit scheibenförmigem pyrotechnischen Festtreibstoff 20 gefüllt sind. Das zylindrische Außengehäuse des Gasgenerators 10 ist durch zwei Rohre 22, 24 gebildet, die jeweils einer Stufe 12 bzw. 14 zugeordnet sind und die über eine Trennwand 26 miteinander verbunden werden. Beide Rohre 22, 24 haben ein axial nach außen gewandtes, geschlossenes, stirnseitiges Ende sowie ein entgegengesetztes, offenes Ende. Jeder Stufe 12, 14 ist auch eine Zündereinheit 32, 34 zugeordnet.

Jede Zündereinheit 32, 34 besteht aus einem rohrförmigen Stutzen, der ein Zünderaufnahmegehäuse 36 bildet und im Inneren einen Aufnahmeraum 38 zur Unterbringung eines Zünders 40 und eines Treibsatzes 41 hat. Die Zünderaufnahmegehäuse 36 stellen zwei Stutzen dar, die radial von den zylindrischen Umfangswänden 42, 44 abstehen und von außen an ihnen befestigt sind.

Das der Umfangswand 42, 44 zugewandte rohrseitige Ende des Zünderaufnahmegehäuses 36 ist unter Bildung eines Absatzes stark verjüngt. Die Verjüngung trägt das Bezugszeichen 50. An diesem stimseitigen Ende besitzen das Zünderaufnahmegehäuse 36 und die Umfangswand 42, 44 ein in den Aufnahmeraum 38 mündendes Durchgangsloch 52. Eine fingerartige Gaseinlaßdüse 53 ragt vom Aufnahmeraum 38 aus durch das Durchgangsloch 52 in das Innere der zugeordneten Brennkammer 16, 18.

Der Gasgenerator 10 ist Teil eines Gassackmoduls, welches eine Generatorhalteplatte 60 und einen Gassack 62 aufweist, der durch den Gasgenerator 10 aufgeblasen wird. Die als Stutzen wirkenden Zünderaufnahmegehäuse 36 dienen auch als Einrichtung zur Befestigung des Gasgenerators 10 an der Generatorhalteplatte 60, welche Öffnungen 64 besitzt, durch die die Zünderaufnahmegehäuse 36 von oben hindurchgesteckt werden. An der Außenfläche des Zünderaufnahmegehäuses ist ein Gewinde, eine Sicherungsnut oder ein sogenanntes 3-K-Profil 66 ausgebildet, das beispielsweise in der DE 42 09 153 A1 beschrieben ist, die diesbezüglich mit in diese Anmeldung einbezogen wird. Eine Mutter bzw. ein anderes mit dem 3-K-Profil ausgestattetes Gegenstück kann dann von unten auf das Zünderaufnahmegehäuse 36 zur Klemmung der Generatorhalteplatte 60 aufgedreht werden.

Im folgenden wird das Verfahren zum Herstellen eines Gasgeneratorgehäuseteils, nämlich einer Einheit aus dem Rohr 22 oder 24 und seinem zugeordneten Zünderaufnahmegehäuse 36 beschrieben. Zur Vereinfachung wird nur die Verbindung zwischen dem Rohr 22 und dem Zünderaufnahmegehäuse 36 erläutert, da das andere Gehäuseteil (Rohr 24 und zugeordnetes Zünderaufnahmegehäuse 36) ebenso hergestellt wird und dieselben für das Verfahren wichtigen Geometrien besitzt.

Das Rohr 22 hat einen Rohraußendurchmesser D von etwa 35 mm und eine sehr geringe Wandstärke WS, die maximal 10%, vorzugsweise etwa 7% des Rohraußendurchmessers D beträgt, vorliegend vorzugsweise sogar weniger als 2 mm dick ist, und aus einem Material mit einer Mindestzugfestigkeit von wenigstens etwa 800 N/mm² besteht. Der Stutzen, d.h. das Zünderaufnahmegehäuse 36 hat einen Durchmesser do im Bereich der Verjüngung 50, der zwischen 15 bis 40%, vorzugsweise etwa 30% des Rohraußendurchmessers D beträgt.

Die Stirnfläche 78 des Stutzens ist vor dem Schweißen plan, und das anzuschweißende Stutzenende ist massiv, wobei aber der Aufnahmeraum 38 vorgefertigt sein kann. Die Außenfläche des Rohres 22 im Bereich des Kontaktes (Schweißfläche) ist vor dem Schweißvorgang nur gereinigt, ansonsten völlig unbearbeitet und nicht abgeflacht.

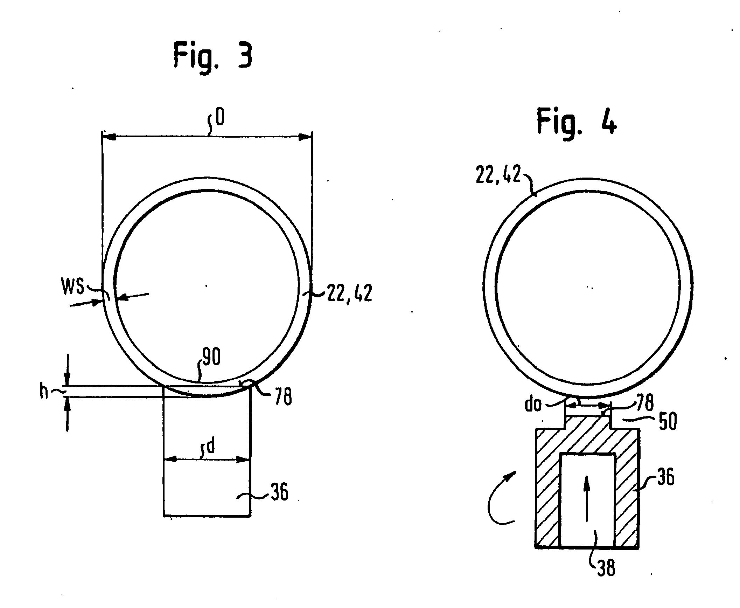

Beide Teile werden in ein entsprechendes Werkzeug eingespannt, wobei die Ausrichtung des Zünderaufnahmegehäuses 36 radial zum Rohr 22 erfolgt. Das Zünderaufnahmegehäuse 36 wird gedreht und radial auf das Rohr 22 zu bewegt, wobei die beiden Teile dadurch reibverschweißt werden. Die Schweißzeit beträgt weniger als 1 sec, vorzugsweise weniger als 0,3 sec, so daß nur relativ kurzzeitig eine Wärmeentwicklung stattfindet. Die Reibtiefe h, die in Fig. 3 zu erkennen ist, beträgt weniger als 80% der Wandstärke WS, vorzugsweise etwa zwei Drittel derselben. Das Zünderaufnahmegehäuse 36 dringt damit nicht ins Rohrinnere ein, sondern es bleibt ein Wandabschnitt 90 zwischen der Innenseite des Rohres 22 und der Stirnfläche 78 des Zünderaufnahrnegehäuses 36 stehen, was zur Erhaltung der Stabilität der Umfangswand 42 beiträgt. Optional könnte zwar beim Reibschweißen ein Haltekörper in das Rohrinnere eingeführt werden, um eine Wandverformung zu verhindern, bei der bevorzugten Ausführung der Erfindung kann ein solcher Körper jedoch weggelassen werden.

Die nach dem Schweißvorgang noch immer vorhandene Verjüngung 50 dient zur Aufnahme des Schweißwulstes 80, der vollständig innerhalb der Verjüngung 50 liegt und der keiner Nachbearbeitung bedarf.

Das erfindungsgemäße Verfahren kann auch zur Anbringung eines Gewindestutzens an einem dünnwandigen Rohr verwendet werden.

## Patentansprüche

1. Verfahren zum Herstellen eines Gasgeneratorgehäuseteils aus einem dünnwandigen Rohr (22, 24) und einem seitlich daran angebrachten Stutzen, **gekennzeichnet durch** folgende Schritte:
a) Bereitstellen eines Rohres (22, 24), dessen Wandstärke (WS) maximal 10% des Rohraußendurchmessers (D) und dessen Mindestzugfestigkeit wenigstens etwa 800 N/mm² beträgt;
b) Bereitstellen eines Stutzens, dessen Außendurchmesser (do) zwischen 15% und 40% des Rohraußendurchmessers (D) beträgt;
c) Ausrichten des Stutzens radial zum Rohr (22, 24), so daß eine Stirnfläche (78) des Stutzens der Außenfläche des Rohres (22, 24) zugewandt ist;
d) Reibverschweißen des Rohres (22, 24) und des Stutzens unter Erzeugung einer Relativdrehung zwischen dem Rohr (22, 24) und dem Stutzen und einem Aufeinandeizubewegen von Rohr (22, 24) und Stutzen, wobei
e) die maximale Schweißzeit weniger als 1 sec, vorzugsweise weniger als 0,3 sec beträgt und
f) die Reibtiefe (h) weniger als 80% der Wandstärke (WS) des Rohres (22, 24) beträgt.

2. Verfahren nach Anspruch 1, **dadurch gekennzeichnet, daß** das Rohr (22, 24) an der Schweißfläche vor dem Schweißvorgang unbearbeitet ist.

3. Verfahren nach Anspruch 1 oder 2, **dadurch gekennzeichnet, daß** das Rohr (22, 24) eine Umfangswand (42, 44) mit einer Wandstärke (WS) von maximal 2,5 mm, vorzugsweise maximal 2 mm hat.

4. Verfahren nach einem der vorhergehenden Ansprüche, **dadurch gekennzeichnet, daß** in den Stutzen nach dem Schweißen ein Durchgangsloch (52) gebohrt wird, das über eine nach dem Schweißen hergestellte seitliche Öffnung in der Umfangswand (42, 44) mit dem Rohrinneren in Verbindung steht.

5. Verfahren nach einem der vorhergehenden Ansprüche, **dadurch gekennzeichnet, daß** der Stutzen ein verjüngtes, rohrseitiges Ende hat.

6. Verfahren nach Anspruch 5, **dadurch gekennzeichnet, daß** das verjüngte Ende bei angeschweißtem Stutzen eine Nut bildet, in der der Schweißwulst (80) liegt.

7. Verfahren nach Anspruch 6, **dadurch gekennzeichnet, daß** der Schweißwulst (80) vollständig innerhalb der Nut liegt.

8. Verfahren nach einem der vorhergehenden Ansprüche, **dadurch gekennzeichnet, daß** der hergestellte Schweißwulst (80) nicht nachbearbeitet wird.

9. Verfahren nach einem der vorhergehenden Ansprüche, **dadurch gekennzeichnet, daß** der Stutzen vor dem Schweißvorgang eine plane rohrseitige Stirnfläche (78) hat.

10. Verfahren nach Anspruch 9, **dadurch gekennzeichnet, daß** der Stutzen am rohrseitigen Ende vor dem Schweißen massiv ist.

11. Gasgenerator, hergestellt durch ein Verfahren nach einem der vorhergehenden Ansprüche, **dadurch gekennzeichnet, daß** der Stutzen hohl ist und einen Zünder (40) aufnimmt, der über ein Durchgangsloch (52) im Stutzen mit dem Rohrinneren in Verbindung steht.

12. Gasgenerator nach Anspruch 11, **dadurch gekennzeichnet, daß** im Rohrinneren eine ein pyrotechnisches Material enthaltende Brennkammer (16, 18) vorgesehen ist.

13. Gassackmodul, mit einem Gasgenerator (10) hergestellt nach dem Verfahren nach einem der Ansprüche 1 bis 9 oder mit einem Gasgenerator nach Anspruch 11 oder 12 und mit einer Generatorhalteplatte (60), **dadurch gekennzeichnet, daß** der Stutzen eine Einrichtung zum Befestigen des Gasgenerators (10) an der Generatorhalteplatte (60) ist.

## Claims

1. A method of producing a gas generator housing part of a thin-walled tube (22, 24) and a connecting piece mounted laterally thereto, **characterized by** the following steps:
a) providing a tube (22, 24) having a wall thickness (WS) which amounts to a maximum of 10% of the tube external diameter (D) and having a minimum tensile strength which amounts to at least approximately 800 N/mm²;
b) providing a connecting piece having an external diameter (do) which amounts to between 15% and 40% of the tube external diameter (D);
c) aligning the connecting piece radially to the tube (22, 24), so that an end face (78) of the connecting piece faces the outer surface of the tube (22, 24);
d) friction welding the tube (22, 24) and the connecting piece while producing a relative rotation between the tube (22, 24) and the connecting piece and moving the tube (22, 24) and the connecting piece towards each other,
e) the maximum welding time amounting to less than 1 sec, preferably less than 0.3 sec, and
f) the friction depth (h) amounting to less than 80% of the wall thickness (WS) of the tube (22, 24).

2. The method according to Claim 1, **characterized in that** the welding surface of the tube (22, 24) is non-machined before the welding process.

3. The method according to Claim 1 or 2, **characterized in that** the tube (22, 24) has a peripheral wall (42, 44) having a wall thickness (WS) of a maximum of 2.5 mm, preferably a maximum of 2 mm.

4. The method according to any of the preceding claims, **characterized in that** a through bore (52) is drilled into the connecting piece after welding, the bore (52) being in connection with the interior of the tube via a lateral opening in the peripheral wall (42, 44) produced after welding.

5. The method according to any of the preceding claims, **characterized in that** the connecting piece has a smaller diameter end on the tube side.

6. The method according to Claim 5, **characterized in that** with the connecting piece welded on, the smaller diameter end forms a groove in which the weld bead (80) is located.

7. The method according to Claim 6, **characterized in that** the weld bead (80) is located entirely inside the groove.

8. The method according to any of the preceding claims, **characterized in that** the weld bead (80) produced is not reworked.

9. The method according to any of the preceding claims, **characterized in that** before the welding process, the connecting piece has a flat end face (78) on the tube side.

10. The method according to Claim 9, **characterized in that** before welding, the connecting piece is solid at the end on the tube side.

11. A gas generator, produced by a method according to any of the preceding claims, **characterized in that** the connecting piece is hollow and holds an igniter (40) which is in connection with the interior of the tube via a through-bore (52) in the connecting piece.

12. The gas generator according to Claim 11, **characterized in that** a combustion chamber (16, 18) containing a pyrotechnic material is provided in the interior of the tube.

13. A gas bag module comprising a gas generator (10) produced in accordance with the method according to any of Claims 1 to 9 or comprising a gas generator according to Claim 11 or 12 and comprising a generator holding plate (60), **characterized in that** the connecting piece is a device for fastening the gas generator (10) to the generator holding plate (60).

## Revendications

1. Procédé de fabrication d'une partie de boîtier de générateur de gaz à partir d'un tube (22, 24) à paroi mince et d'un manchon monté latéralement sur celui-ci, **caractérisé en ce que** par les étapes suivantes :
a) fournir un tube (22, 24) dont l'épaisseur de paroi (WS) est au maximum de 10 % du diamètre extérieur (D) de tube et dont la résistance minimum à la traction est d'au moins approximativement 800 N/mm² ;
b) fournir d'un manchon, dont le diamètre extérieur (do) est entre 15 % et 40 % du diamètre extérieur de tube (D) ;
c) orienter le manchon radialement par rapport au tube (22, 24) de sorte qu'une face frontale (78) du manchon est tournée vers la surface extérieure du tube (22, 24) ;
d) souder par friction le tube (22, 24) et le manchon en produisant une rotation relative entre le tube (22, 24) et le manchon et un rapprochement du tube (22, 24) et du manchon,
e) le temps de soudage maximum est inférieur à 1 s, de préférence moins de 0,3 s, et
f) la profondeur de friction (h) est inférieure à 80 % de l'épaisseur de paroi (WS) du tube (22, 24).

2. Procédé selon la revendication 1, **caractérisé en ce que** sur la surface de soudage, le tube (22, 24) est non usiné avant l'opération de soudage.

3. Procédé selon la revendication 1 ou 2, **caractérisé en ce que** le tube (22, 24) a une paroi périphérique (42, 44) avec une épaisseur de paroi (WS) de 2,5 mm au maximum, de préférence de 2 mm au maximum.

4. Procédé selon l'une des revendications précédentes, **caractérisé en ce qu'**après le soudage, un trou de passage (52) est percé dans le manchon, trou de passage qui est en liaison avec l'intérieur du tube par l'intermédiaire d'une ouverture latérale réalisée dans la paroi périphérique (42, 44) après le soudage.

5. Procédé selon l'une des revendications précédentes, **caractérisé en ce que** le manchon a une extrémité effilée côté tube.

6. Procédé selon la revendication 5, **caractérisé en ce que** l'extrémité effilée forme, lorsque le manchon est soudé, une gorge dans laquelle se trouve un bourrelet de soudure (80).

7. Procédé selon la revendication 6, **caractérisé en ce que** le bourrelet de soudure (80) est situé entièrement à l'intérieur de la rainure.

8. Procédé selon l'une des revendications précédentes, **caractérisé en ce que** le bourrelet de soudure (80) réalisé n'est pas retouché.

9. Procédé selon l'une des revendications précédentes, **caractérisé en ce qu'**avant l'opération de soudage, le manchon a une face frontale (78) plane côté tube.

10. Procédé selon la revendication 9, **caractérisé en ce qu'**avant le soudage, le manchon est massif à l'extrémité côté tube.

11. Générateur de gaz, fabriqué par un procédé selon l'une des revendications précédentes, **caractérisé en ce que** le manchon est creux et reçoit une amorce (40) qui est en liaison avec l'intérieur du tube par l'intermédiaire d'un trou de passage (52) dans le manchon.

12. Générateur de gaz selon la revendication 11, **caractérisé en ce qu'**il est prévu à l'intérieur du tube une chambre de combustion (16, 18) contenant un matériau pyrotechnique.

13. Module de coussin à gaz avec un générateur de gaz (10) fabriqué selon le procédé selon l'une des revendications 1 à 9, ou avec un générateur de gaz selon les revendications 11 ou 12 et comportant une plaque de maintien de générateur (60), **caractérisé en ce que** le manchon est un dispositif servant à fixer le générateur de gaz (10) sur la plaque de maintien de générateur (60).
